# FASCICULE DE BREVET EUROPEEN

(11) **EP 0 449 679 B1**
(45) Date de publication et mention de la délivrance du brevet: **01.09.1993**
(21) Numéro de dépôt: 91400512.9
(22) Date de dépôt: 26.02.1991
(51) Int. Cl.: B60T 8/18

(54) **Compensateur de freinage à valve additionnelle**
Bremsdruckregler mit Zusatzventil
Brake pressure corrector with additional valve

(30) Priorité: 29.03.1990 FR 9004005
(43) Date de publication de la demande: 02.10.1991
(73) Titulaire: ALLIEDSIGNAL EUROPE SERVICES TECHNIQUES, 93700 Drancy (FR)
(72) Inventeur: Levrai, Roland, Bendix Europe Services Techniques, F-93700 Drancy (FR); Dufosse, Jacques, Bendix Europe Services Techn., F-93700 Drancy (FR)
(74) Mandataire: Bentz, Jean-Paul

(56) Documents cités:
- DE-A- 3 702 732
- PATENT ABSTRACTS OF JAPAN vol. 9, no. 73 (M-368)(1796) 03 avril 1985,& JP-A-59 202964 (NISSAN) 16 novembre 1984

## Description

La présente invention concerne un compensateur de freinage d'un véhicule, asservi à la charge du véhicule et piloté fluidiquement.

De tels compensateurs de freinage sont connus de l'homme du métier depuis bien longtemps.

Le document FR-A-2 600 957 décrit, par exemple, un compensateur selon le préambule de la revendication principale.

Ce compensateur est du type comprenant un piston coulissant dans un alésage étagé pratiqué dans un corps et portant un clapet normalement ouvert disposé entre une source de fluide sous pression et un circuit de freinage associé, le piston étant mobile à l'encontre d'un ressort sous l'effet de la pression du fluide qui tend à fermer le clapet, et comprenant en outre une chambre étanche de pilotage reliée à un détecteur de charge.

Un tel compensateur présente un défaut important qui peut devenir grave dans certains cas. En effet, on sait qu'un tel compensateur set à moduler la pression du fluide de freinage dans les roues arrières en fonction de la pression de la source et de la charge du véhicule pour éviter un blocage des roues arrières lors du freinage. Or lors d'un freinage, les roues arrières sont naturellement délestées, car il se produit un report de charge vers l'avant du véhicule. La détermination du point de coupure du compensateur résultant du réglage du compensateur en usine et ce réglage dépendant d'un compromis choisi tenant compte ou non d'un certain report de charge, le freinage du véhicule n'est donc optimal que dans certains cas très spécifiques.

En effet, si le réglage est prévu pour un report de charge moyen, en cas de freinage rapide où le report de charge est plus important que le report de charge moyen prévu, du fait du temps de réponse inhérent à la liaison fluidique entre le détecteur de charge et la chambre de pilotage du compensateur, ce dernier "voit" une charge plus lourde que celle existant réellement. Les roues arrières sont alors trop freinées par rapport à ce qu'elles peuvent supporter, et il peut en résulter un blocage de ces roues arrières. Cet effet pervers s'amplifie avec l'importance demandée du freinage et va donc totalement à l'encontre de la sécurité.

Si le réglage est prévu pour un report de charge maximal, c'est le contraire qui se passe, et les roues arrières ne sont pas assez freinées par rapport à ce qu'elles peuvent supporter (sauf en freinage rapide). Les roues avant assurent alors une trop grande partie du freinage du véhicule, ce qui nécessite un sur-dimensionnement des freins correspondant, et qui peut entraîner un blocage des roues avant en cas de mauvaise adhérence.

La présente invention a pour but d'obvier à cet inconvénient majeur résultant d'un réglage de type compromis, en faisant en sorte que le compensateur mémorise la charge du véhicule avant le report de charge dû au freinage. Le point de coupure du compensateur peut alors être réglé en usine indépendamment du délestage et ne résulte plus d'un compromis pouvant avoir un effet pervers.

Dans ce but, selon l'invention, le compensateur comprend une valve additionnelle normalement ouverte disposée entre la chambre et le détecteur pour interrompre la communication entre la chambre et le détecteur lors d'un freinage.

De préférence, la valve additionnelle est commandée par la pression du fluide à l'encontre d'un ressort.

De manière alternative, la valve additionnelle est une électrovalve interrompant la communication lorsque la mise sous pression du fluide de la source est commandée, ou bien une valve sensible à la décélération, le clapet de celle-ci interrompant la communication par inertie.

L'invention sera mieux comprise et d'autres buts, avantages et caractéristiques de celle-ci apparaîtront plus clairement à la lecture de la description qui suit d'un mode de réalisation donné à titre non limitatif et à laquelle deux planches de dessins sont annexées sur lesquelles :
- la Figure 1 illustre schématiquement un compensateur selon un premier mode de réalisation de l'invention,
- les Figures 2 et 3 représentent chacune schématiquement en coupe un compensateur selon le schéma de la Figure 1,
- les Figures 4 et 5 illustrent deux autres modes de réalisation de l'invention.

Sur les Figures, les éléments identiques portent les mêmes références.

Sur ces Figures, ce compensateur comprend un détecteur fluidique de charge 10, par exemple disposé sous le ressort de suspension d'une roue arrière. Ce détecteur 10 est généralement constitué d'une poche étanche emplie d'un fluide tel l'air, l'huile ou l'eau. Cette poche est reliée par un conduit 12 à la chambre étanche de pilotage 16 à volume variable du compensateur. Cette chambre 16 commande l'effort sur un poussoir sur lequel un piston étagé 18 coulissant dans un alésage pratiqué dans un corps, est susceptible de venir en appui pour modifier le point de coupure du clapet que le piston 18 porte. La source de fluide sous pression est connectée au conduit 20, tandis que le circuit d'utilisation associé est connecté au conduit 22. Le fonctionnement d'un tel compensateur est considéré comme étant bien connu de l'homme du métier et ne sera pas repris en détail ici.

En peu de mots, lorsque la source de fluide sous pression est activée, le piston 18 se déplace dans le sens de la fermeture du clapet qu'il porte pour interrompre la communication entre les conduits 20 et 22. Le moment de fermeture de ce clapet est déterminé par la pression de la source de fluide sous pression et par l'effort sur le poussoir commandé par la chambre de pilotage 16.

Selon l'invention, le compensateur comprend une valve additionnel 14 disposée dans le conduit 12, normalement ouverte, et interrompant la communication entre le détecteur de charge 10 et la chambre de pilotage 16 lors d'un freinage. Ainsi, pendant le freinage, la chambre 16 est telle qu'elle était avant le freinage quelque soit le report de charge détecté par le détecteur 10.

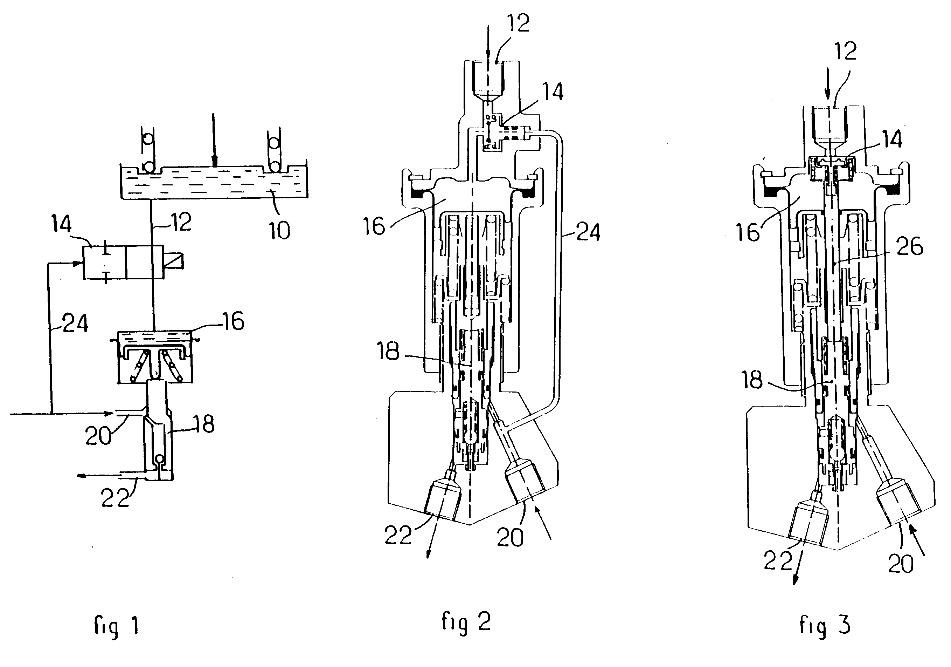

Sur la Figure 1, on a représenté schématiquement cette valve additionnelle 14 commandée par un piston sensible à la pression de la source de fluide sous pression. Un conduit 24 relie donc le conduit 20 à cette valve 14 pour interrompre la communication dès que la pression de la source atteint un seuil déterminé.

Les Figures 2 et 3 illustrent ce mode de réalisation de façon pratique. Sur la Figure 2, le conduit 24 est disposé hors de la partie active du compensateur proprement dit, tandis que sur la Figure 3, les conduits 22 et 24 ne forment qu'un seul conduit, le piston assurant la fermeture du clapet de la valve 14 étant alors le piston traditionnel 18 auquel est solidarisé une tige de type télescopique 26 permettant de fermer le clapet de la valve 14 tout en autorisant les mouvement du piston même lorsque le clapet est fermé.

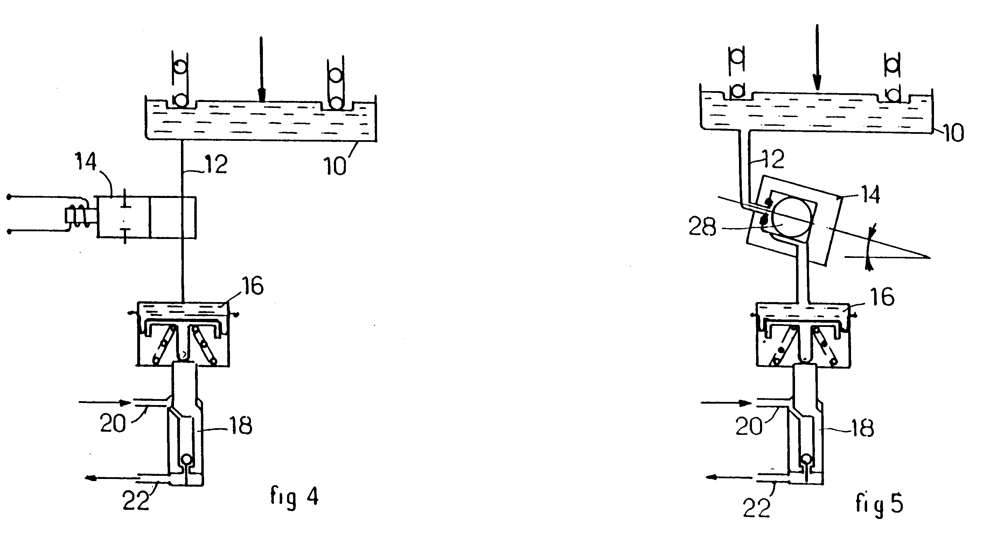

L'exemple illustré Figure 2 permet d'utiliser les compensateurs traditionnels sans modifications de ceux-ci (sauf sur le plan du réglage) et d'obtenir l'effet recherché par simple adjonction d'un composant. Il en est de même des modes de réalisation illustrés Figures 4 et 5.

Figure 4, on a représenté schématiquement un compensateur selon l'invention, mais dont la valve additionnelle est une électrovalve commandée par exemple au moyen du contacteur de stop dont est pourvu tout véhicule pour permettre l'allumage des feux arrières de stop. Ainsi dès que le conducteur appuie sur la pédale de frein, la chambre 16 est isolée du détecteur 10 pour obtenir l'effet recherché avant le début du freinage.

Figure 5, la valve additionnelle 14 est une valve sensible à la décélération dont l'axe fait un certain angle par rapport à l'horizontal. Ainsi, le clapet constitué par la bille 28 est normalement ouvert au repos et dès que le véhicule est décéléré, la bille 28 vient fermer le conduit 12 en s'appuyant sur son siège par simple inertie. L'homme du métier choisira cette solution lorsqu'il désirera isoler la chambre 16 après le début du freinage.

On comprendra aisément que l'homme du métier pourra apporter de nombreuses modifications à la présente invention sans sortir du cadre défini par les revendications annexées. Par exemple, la valve additionnelle pourra avoir une troisième position pour laquelle la communication entre le détecteur 10 et la chambre de pilotage 16 ne sera pas interrompue mais simplement réduite par une restriction, l'information de report de charge étant alors amenée au compensateur avec un retard calculé.

## Revendications

1. Compensateur de freinage de véhicule, ledit compensateur étant asservi à la charge du véhicule et piloté fluidiquement, et étant du type comprenant un piston (18) coulissant dans un alésage étagé pratiqué dans un corps et portant un clapet normalement ouvert disposé entre une source de fluide sous pression et un circuit de freinage associé, ledit piston (18) étant mobile à l'encontre d'un ressort sous l'effet de la pression dudit fluide qui tend à fermer ledit clapet, et comprenant en outre une chambre étanche de pilotage (16) reliée à un détecteur de charge (10), caractérisé en ce qu'il comprend une valve additionnelle (14) normalement ouverte disposée entre ladite chambre (16) et ledit détecteur (10) pour interrompre la communication entre ladite chambre (16) et ledit détecteur (10) lors d'un freinage.

2. Compensateur de freinage de véhicule selon la revendication 1, caractérisé en ce que ladite valve additionnelle (14) est commandée par la pression dudit fluide à l'encontre d'un ressort.

3. Compensateur de freinage de véhicule selon la revendication 2, caractérisé en ce que le clapet de ladite valve additionnelle (14) est solidaire d'un deuxième piston à la base duquel est appliquée le fluide sous pression.

4. Compensateur de freinage de véhicule selon la revendication 2, caractérisé en ce que le clapet de ladite valve additionnelle (14) est mu par une tige (26) de type télescopique solidaire dudit piston (18).

5. Compensateur de freinage de véhicule selon la revendication 1, caractérisé en ce que ladite valve additionnelle (14) est une électrovalve interrompant ladite communication lorsque la mise sous pression du fluide de ladite source est commandée.

6. Compensateur de freinage de véhicule selon la revendication 1, caractérisé en ce que ladite valve additionnelle (14) est une valve sensible à la décélération, son clapet interrompant ladite communication par inertie.

## Patentansprüche

1. Fahrzeug-Bremsausgleicher, der durch die Last des Fahrzeugs gesteuert und fluidgesteuert ist, und der von der Art ist, die einen Kolben (18) enthält, der in einer gestuften Bohrung verschiebbar ist, die in einem Körper ausgebildet ist, und ein normalerweise offenes Sperrventil aufweist, das zwischen einer Druckfluidquelle und einem zugeordneten Bremskreis angeordnet ist, wobei der Kolben (18) entgegen einer Feder unter der Wirkung des Drucks des Fluids bewegbar ist, der die Tendenz besitzt, das Sperrventil zu schließen, und überdies eine dichte Steuerkammer (16) enthält, der mit einem Lastdetektor (10) verbunden ist, dadurch gekennzeichnet, daß er ein normalerweise offenes Zusatzventil (14) enthält, das zwischen der Kammer (16) und dem Detektor (10) angeordnet ist, um die Verbindung zwischen der Kammer (16) und dem Detektor (10) während einer Bremsung zu unterbrechen.

2. Fahrzeug-Bremsausgleicher nach Anspruch 1, dadurch gekennzeichnet, daß das Zusatzventil (14) durch den Druck des Fluids entgegen einer Feder gesteuert ist.

3. Fahrzeug-Bremsausgleicher nach Anspruch 2, dadurch gekennzeichnet, daß das Ventilglied des Zusatzventils (14) fest mit einem zweiten Kolben verbunden ist, dessen Basis vom Druckfluid beaufschlagt wird.

4. Fahrzeug-Bremsausgleicher nach Anspruch 2, dadurch gekennzeichnet, daß das Ventilglied des Zusatzventils (14) mit einer teleskopartigen Stange (26) versehen ist, die fest mit dem Kolben (18) verbunden ist.

5. Fahrzeug-Bremsausgleicher nach Anspruch 1, dadurch gekennzeichnet, daß das Zusatzventil (14) ein Elektroventil ist, das die Verbindung unterbricht, wenn das Unterdrucksetzen setzen des Fluids der quelle angeordnet wird.

6. Fahrzeug-Bremsausgleicher nach Anspruch 1, dadurch gekennzeichnet, daß das Zusatzventil (14) auf die Verlangsamung anspricht, wobei sein Ventilglied die Verbindung durch Trägheit unterbricht.

## Claims

1. Vehicle brake pressure proportioning valve, said proportioning valve being subject to the load of the vehicle and controlled fluidically and being of the type comprising a piston (18) sliding in a stepped bore made in a body and carrying a normally open shutter arranged between a source of fluid under pressure and an associated brake circuit, said piston (18) being movable counter to a spring under the effect of the pressure of said fluid which tends to close said shutter, and comprising furthermore a sealed control chamber (16) connected to a load sensor (10), characterized in that it comprises a normally open additional valve (14) arranged between said chamber (16) and said sensor (10), in order to interrupt communication between said chamber (16) and said sensor (10) during a braking operation.

2. Vehicle brake pressure proportioning valve according to claim 1, characterized in that said additional valve (14) is controlled by the pressure of said fluid counter to a spring.

3. Vehicle brake pressure proportioning valve according to claim 2, characterized in that the shutter of said additional valve (14) is fixed to a second piston, to the base of which the fluid under pressure is applied.

4. Vehicle brake pressure proportioning valve according to claim 2, characterized in that the shutter of said additional valve (14) is actuated by means of a rod (26) of telescopic type fixed to said piston (18).

5. Vehicle brake pressure proportioning valve according to claim 1, characterized in that said additional valve (14) is a solenoid valve interrupting said communication when the pressurization of the fluid of said source is commanded.

6. Vehicle brake pressure proportioning valve according to claim 1, characterized in that said additional valve (14) is a valve sensitive to the deceleration, its shutter interrupting said communication by inertia.
